(19) Europäisches Patentamt
European Patent Office
Office européen des brevets

(11) **EP 3 002 946 A1**

(12) **EUROPEAN PATENT APPLICATION**

(43) Date of publication:
**06.04.2016 Bulletin 2016/14**

(51) Int Cl.:
**H04N 19/117** (2014.01)    **H04N 19/154** (2014.01)
**H04N 19/31** (2014.01)    **H04N 19/587** (2014.01)
**H04N 19/82** (2014.01)

(21) Application number: **14306559.7**

(22) Date of filing: **03.10.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Bordes, Philippe**
**35576 CESSON SEVIGNE (FR)**

• **Andrivon, Pierre**
**35576 CESSON SEVIGNE (FR)**
• **Hiron, Franck**
**35576 CESSON SEVIGNE (FR)**

(74) Representative: **Huchet, Anne**
**Technicolor**
**1-5 rue Jeanne d'Arc**
**92130 Issy-Les-Moulineaux (FR)**

(54) **Video encoding and decoding methods for a video comprising base layer images and enhancement layer images, corresponding computer programs and video encoder and decoders**

(57)    Video encoding method comprising: - receiving a video comprising a sequence of images ($I$) comprising base layer images ($BLI_n$) and enhancement layer images ($ELI_n$); - temporally filtering each base layer image ($BLI_n$) into a temporally filtered image $(BLI_n^*)$; - encoding the base layer images ($BLI_n$) in order to produce base layer encoded video data ($BLEVD$) and reconstructed base layer image ($rec\_BLI_n$); - encoding (206) the enhancement layer images ($ELI_n$) in order to produce enhancement layer encoded video data ($BLEVD$); - determining at least one parameter ($P_n$) of a parametric filter for each reconstructed base layer image ($rec\_BLI_n$), such that applying the parametric filter with the parameter(s) ($P_n$) to a version ($rec\_BLI_n$; $F1\_BLI_n$) of the reconstructed base layer image ($rec\_BLI_n$) produces a corrected base layer image ($cor\_BLI_n$) which is closer to the temporally filtered image $(BLI_n^*)$ than the version ($rec\_BLI_n$; $F1\_BLI_n$) of the reconstructed base layer image ($rec\_BLI_n$); - providing the base layer encoded video ($BLEVD$), the enhancement layer encoded video ($ELEVD$) and the parameters ($P_n$).

<u>**Figure 1**</u>

EP 3 002 946 A1

**Description**

FIELD

The invention relates to temporal scalable video coding.

BACKGROUND

In case of temporal scalability, it is known to produce a video comprising a sequence of images comprising base layer images and enhancement layer images, alternating with each other.

The type of each image (base layer or enhancement layer) is indicated in the video. In this manner, a video decoder operating at high frame rate (e.g. 100Hz) will receive and decode both base and enhancement layer images. High frame rate is desirable for example for sport video. On the contrary, a video decoder operating at low frame rate (e.g. 50Hz) will receive both layers, but will discard the enhancement layer images and will decode only the base layer images, that is to say one image out of two.

One way to produce the previously described video is to shoot the video at the higher rate (e.g. 100Hz) and to define one image out of two as base layer images, the remaining images being defined as enhancement layer images. Doing so, an issue is to be considered: the choice of the shutter opening time of the camera.

For a given frame rate ($T_{frame}$) and a shutter time ratio value ($A_{shutter}$), motion blur due to the captor integration time occurs for displacement speed superior or equal to $V_{limit}$ defined by:

$$V_{limit} = \frac{2 \times width}{N_{pixel} \times T_{frame} \times A_{shutter}}$$

where:

$T_{frame}$ = frame rate,
$N_{pixel}$ = number of pixels (width)
Width = screen panel width
($T_{frame} \times A_{shutter}$) is the aperture time duration

For a given screen size, if $A_{shutter}$ is chosen to avoid blur in the full rate video (comprising both the base layer images and the enhancement layer images) ($T_{frame}$=100 fps), the shutter time ratio value will be too short for the low rate video (comprising only the base layer images) ($T_{frame}$=50 fps) and there will be a stroboscopic effect.

To overcome this problem, it is possible to temporally filter ("motion blur") the base layer images. However, this temporal filtering will also appear in the full rate video (in the base layer images) which will decrease video quality of the full rate video.

There is therefore a need for a video encoding method which is scalable and which insures good image quality when only the base layer images are decoded and also when both the base and enhancement layer images are decoded.

SUMMARY OF THE INVENTION

It is proposed a video encoding method according to claim 1.

Thanks to the invention, a temporal filtering can be applied only when the base layer images are decoded, and not when both the base and enhancement layer images are decoded.

Other features of the method are set forth in claims 2 to 12.

It is also proposed a computer program according to claim 13.

It is also proposed a video encoder according to claim 14.

It is also proposed a video decoding method according to claim 15.

It is also proposed a computer program according to claim 16.

It is also proposed a video decoder according to claim 17.

BRIEF DESCRIPTION OF THE DRAWING

An embodiment of the invention will now be described by way of example only and with reference to the appended figures.

Figure 1 illustrates a video encoder according to the invention.
Figure 2 illustrates a video encoding method according to the invention.
Figure 3 illustrates a first video decoder according to the invention.
Figure 4 illustrates a first video decoding method according to the invention.
Figure 5 illustrates a second video decoder according to the invention.
Figure 6 illustrates a second video decoding method according to the invention.

DETAILED DESCRIPTION OF THE DRAWING

In the following description, the term "filter" encompasses any image transformation.

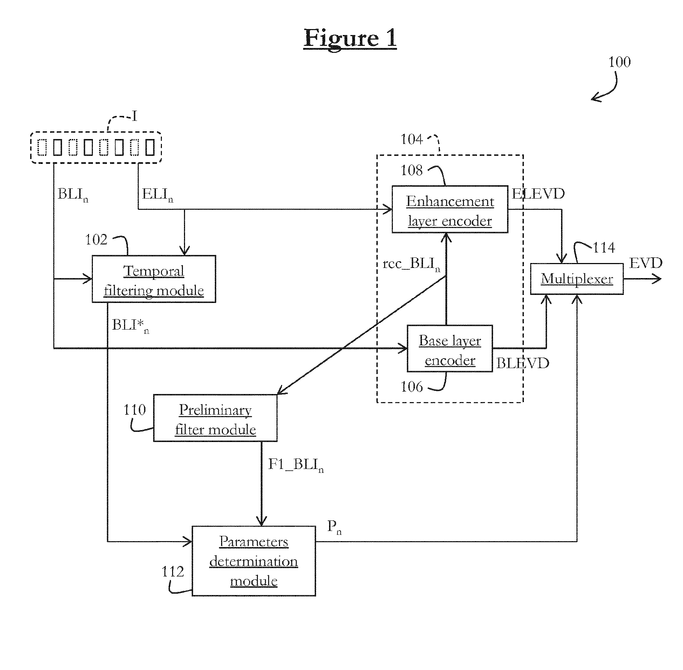

With reference to figure 1, a video encoding system 100 will now be described. The video encoding system 100 is configured to receive a video comprising a sequence of images $I$. The sequence of images $I$ comprises base layer images $BLI_n$ (depicted with solid lines) and enhancement layer images $ELI_n$ (depicted with dotted lines). The enhancement layer images $ELI_n$ are interleaved between the base layer images $BLI_n$. Preferably, the sequence of images $I$ comprises one enhancement layer image $ELI_n$ every $L$ base layer images $BLI_n$, $L$ being a predetermined integer for example equal to one or two. In the described example, the sequence of images $I$ comprises 2N images and $L$ is equal to 1, which means that the base layer images $BLI_n$ alternate with the enhancement layer images $ELI_n$:

$$I = BLI_1, ELI_1, \dots, BLI_n, ELI_n, \dots, BLI_N, ELI_N$$

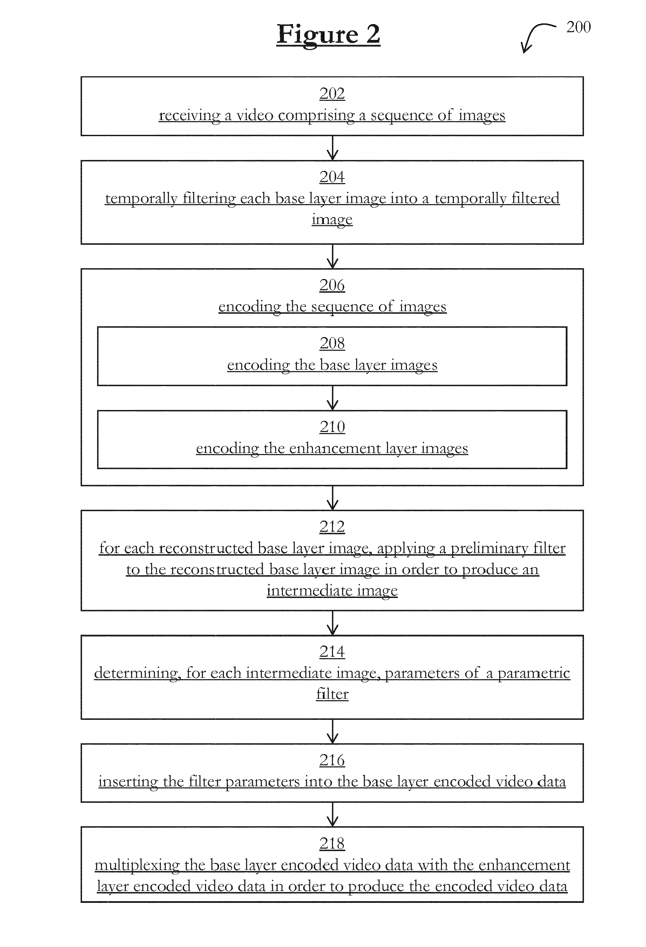

The elements of the video encoding system 100 will now be introduced and their functioning described in greater detail later, with reference to figure 2.

The video encoding system 100 comprises a temporal filtering module 102 configured to temporally filter each base layer image $BLI_n$ into a temporally filtered image $BLI_n^*$. The temporally filtered images $BLI_n^*$ are intended to simulate what would have been produced by a camera shooting the video with a longer integration time. The temporal filtering leads to several modifications in the image, which may include for example motion blurring, as well as other optical effects.

The video encoding system 100 further comprises a video encoder 104 configured to encode the base layer images $BLI_n$ and the enhancement layer images $ELI_n$ in order to respectively provide base layer encoded video data *BLEVD* and enhancement layer encoded video data *ELEVD.*

The video encoder 104 comprises a base layer encoder 106 configured to encodes the base layer images $BLI_n$ in order to produce the base layer encoded video data *BLEVD* in the form of a base layer bitstream, and reconstructed base layer images $rec\_BLI_n$. According to a specific and non-limiting embodiment, the base layer encoder 106 is an H. 264 or an HEVC compliant encoder.

The video encoder 104 further comprises an enhancement layer encoder 108 configured to encode the enhancement layer images $ELI_n$ in order to produce enhancement layer encoded video data *ELEVD* in the form of an enhancement layer bitstream. According to a specific and non-limiting embodiment, the enhancement layer encoder 108 is an H.264 or an HEVC compliant encoder.

The video encoding system 100 further comprises an optional preliminary filter module 110 configured, for each reconstructed base layer image $rec\_BLI_n$, to apply a preliminary filter $F1$ to the reconstructed base layer image $rec\_BLI_n$ in order to produce an intermediate image $F1\_BLI_n$.

The video encoding system 100 further comprises a parameters determination module 112 configured to determine, for each reconstructed base layer image $rec\_BLI_n$, at least one filter parameter $P_n$ of a parametric filter F2. The filter parameter(s) $P_n$ is/are such that applying the parametric filter F2 with the filter parameter(s) $P_n$ to a version of the reconstructed base layer image $rec\_BLI_n$ produces a corrected base layer image $cor\_BLI_n$ similar to the corresponding temporally filtered image $BLI_n^*$:

$$cor\_BLI_n = F2(int\_BLI_n) \approx BLI_n^*$$

The version of the reconstructed base layer image $rec\_BLI_n$ may be the reconstructed base layer image $rec\_BLI_n$ itself, for instance when the preliminary filter module 110 is absent. Alternatively, the version of the reconstructed base

layer image *rec_BLI$_n$* may be the intermediate image *F*1_*BLI$_n$* when the preliminary filter module 110 is present.

The corrected base layer image *cor_BLI$_n$* is closer in content to the temporally filtered image $BLI_n^*$ than the version of the reconstructed base layer image *rec_BLI$_n$*. This means that, according to a predetermined distance, the distance between the content of the corrected base layer image *cor_BLI$_n$* and the content of the temporally filtered image $BLI_n^*$ is smaller than the distance between the content of the version of the version of the reconstructed base layer image *rec_BLI$_n$* and the content of the temporally filtered image $BLI_n^*$. The distance is for example a L2-norm.

The video encoder 100 optionally comprises a multiplexer 114 configured to multiplex the base layer encoded video data *BLEVD* with the enhancement layer encoded video data *ELEVD* in order to produce the encoded video data *EVD* in the form of a bitstream. The multiplexer 114 may also be configured to multiplex the filter parameters *P$_n$* with the base layer encoded video data *BLEVD*. Furthermore, the multiplexer 114 may be configured to transmit or to store the encoded video data *EVD*. The encoded video data *EVD* may be decoded by a decoder, such as the one described later, into a decoded video similar to the received video

In a variant, the multiplexer 114 is external to the video encoder 100.

With reference to figure 2, a video encoding method 200, for example carried out by the video encoding system 100, will now be described.

During a step 202, the video encoding system 100 receives the video comprising the sequence of images *I*.

During a step 204, the temporal filtering module 102 temporally filters each base layer image *BLI$_n$* into a temporally filtered image $BLI_n^*$.

Advantageously, one or several enhancement layer images *ELI$_n$* are used for temporally filtering a base layer image *BLI$_n$*. In this case, the temporal filtering corresponds to a down conversion since two images (or more) are used for computing a single image. Each of the enhancement layer images *ELI$_n$* used for temporally filtering a base layer image *BLI$_n$* may precede or follow this base layer image *BLI$_n$*. For example, the directly preceding image *ELI$_{n-1}$* or directly following image *ELI$_n$* may be used. In the described example, the directly preceding image *ELI$_{n-1}$* is used.

Advantageously, temporally filtering a base layer image *BLI$_n$* comprises computing a mean of the base layer image *BLI$_n$* with the enhancement layer image(s) *ELI$_n$* used for the temporal filtering.

For example, in the case of the described example where the directly preceding image *ELI$_{n-1}$* is used, a temporally filtered image $BLI_n^*$ may be obtained according to the following equation:

$$|BLI_n^*[p]| = \frac{|BLI_n[p]| + |ELI_{n-1}[p]|}{2}$$

where p is a pixel of the temporally filtered image $BLI_n^*$, $|BLI_n^*[p]|$ is the value of the pixel p in the temporally filtered image $BLI_n^*$, $|BLI_n[p]|$ is the value of the pixel p in the base layer image *BLI$_n$*, and $|ELI_{n-1}[p]|$ is the value of the pixel p in the directly preceding enhancement layer image *ELI$_{n-1}$*.

Alternatively, additional motion compensated frames from the base layer image *BLI$_n$* and/or enhancement layer image(s) *ELI$_n$* could be used to compute the mean.

During a step 206, the video encoder 104 encodes the base layer images *BLI$_n$* and the enhancement layer images *ELI$_n$* in order to respectively produce base layer encoded video data *BLEVD* and enhancement layer encoded video data *ELEVD*.

More precisely, the step 206 comprises a step 208 during which the base layer encoder 106 encodes the base layer images *BLI$_n$* in order to produce the base layer encoded video data *BLEVD* and reconstructed base layer images *rec_BLI$_n$*.

Advantageously, the base layer images *BLI$_n$* are encoded independently of the enhancement layer images *ELI$_n$*.

Usually, in particular when the base layer encoder 106 is H.264 or HEVC compliant, for encoding a base layer image *BLI$_n$*, this base layer image *BLI$_n$* is first partitioned into coding units, e.g. into blocks or macroblocks, according to a partition called encoding partition.

Each coding unit is then encoded by determining a prediction of the coding unit. For determining the prediction, particularly in the case of inter prediction, motion vectors, called encoding motion vectors *enc_MV$_n$*, are determined with respect to reconstructed coding units taken as references. The prediction is then determined from the encoding motion

vectors $enc\_MV_n$ and the reference reconstructed coding units.

A residual between the prediction and the coding unit is then determined and the residual is encoded. Classically, encoding the residual comprises applying a transformation T (e.g. a DCT) to the residual in order to produce coefficients, which are in turn quantized and entropy coded.

The coding unit is then reconstructed in order to produce a reconstructed coding unit. To this aim, the quantized coefficients are dequantized and the inverse transform $T^{-1}$ is applied to the dequantized coefficients. The prediction is then added to the result of the inverse transform $T^{-1}$ in order to produce the reconstructed coding unit.

The reconstructed coding units may serve as reference when coding other coding units.

The reconstructed coding units obtained during the encoding of a base layer image $BLI_n$ forms a reconstructed base layer image $rec\_BLI_n$ corresponding to this base layer image $BLI_n$.

The step 206 further comprises a step 210 during which the enhancement layer encoder 108 encodes the enhancement layer images $ELI_n$ in order to produce the enhancement layer encoded video data $ELEVD$.

Advantageously, at least some of the enhancement layer images $ELI_n$ are encoded from the reconstructed base layer images $rec\_BLI_n$. In this case, the reconstructed base layer images $rec\_BLI_n$ may be used in the prediction of the enhancement layer images $ELI_n$.

During an optional step 212, for each reconstructed base layer image $rec\_BLI_n$, the preliminary filter module 110 applies the preliminary filter $F1$ to the corresponding reconstructed base layer image $rec\_BLI_n$ in order to produce an intermediate image $F1\_BLI_n$:

$$F1\_BLI_n = F1(rec\_BLI_n)$$

In the described example, the preliminary filter $F1$ is a motion compensated temporal filter configured to filter the reconstructed base layer image $rec\_BLI_n$, according to one or several other reconstructed base layer images, taken as reference images. Accordingly, in the described example, the step 212 is carried out as follows.

Motion vectors, called filtering motion vectors $filt\_MV_n$, are first determined, for example by carrying out motion estimation. Advantageously, at least one filtering motion vector $filt\_MV_n$ is determined from at least one encoding motion vector $enc\_MV_n$. For example, an encoding motion vector $enc\_MV_n$ is taken as the filtering motion vector $filt\_MV_n$. Alternatively, an encoding motion vector $enc\_MV_n$ is used to derive a candidate (for example, it may be used directly as a candidate) in the motion estimation process for determining the filtering motion vector $filt\_MV_n$.

The preliminary filter module 110 then determines the intermediate image $F1\_BLI_n$ from the filtering motion vectors $filt\_MV_n$ and one or several other reconstructed base layer images $rec\_BLI_n$, taken as reference images.

For example, when the preliminary filter $F1$ is a linear motion compensated filter, the value of the pixel p in the intermediate image $F1\_BLI_n$ is equal to a weighted sum of the value of the pixel p and the value(s) of the corresponding reference pixel(s) (i.e. the pixel(s) in the reference reconstructed base layer image(s)). For example, the two directly preceding images $rec\_BLI_{n-1}$ and $rec\_BLI_{n-2}$ may be taken as reference images. In this case, the value of each pixel p in the intermediate image $F1\_BLI_n$ may be given by:

$$|F1\_BLI_n[p]| = w_0|rec\_BLI_n[p]| + w_1|rec\_BLI_{n-1}[p + k1.filt\_MV_n^1(p)]|$$
$$+ w_2|rec\_BLI_{n-2}[p + k2.filt\_MV_n^2(p)]|$$

where $|F1\_BLI_n[p]|$ is the value of the pixel p in the intermediate image $F1\_BLI_n$, $|rec\_BLI_n[p]|$ is the value of the pixel p in the reconstructed base layer image $rec\_BLI_n$, $|rec\_BLI_{n-1}[p + filt\_MV_n^1(p)]|$ is the value of a pixel located at the location $p + k1.filt\_MV_n^1(p)$ in the reconstructed base layer image $rec\_BLI_{n-1}$, k1 is for example equal to 1,5 in order to increase the length of the first filtering motion vector so that the motion it represents corresponds to a time around n+1/2, $|rec\_BLI_{n-2}[p + k2.filt\_MV_n^2(p)]|$ is the value of a pixel located at the location $p + k2.filt\_MV_n^2(p)$ in the reconstructed base layer image $rec\_BLI_{n-2}$, k2 is for example equal to 1,25 in order to increase the length of the second filtering vector so that the motion it represents corresponds to a time around n+1/2, and $w_0$, $w_1$ and $w_2$ are the respective weights.

During a step 214, the parameters determination module 112 determines at least one filter parameter $P_n$ of the parametric filter $F2$ for each reconstructed base layer image $rec\_BLI_n$.

In a particular embodiment where the preliminary filter *F*1 is applied, the step 214 comprises the followings steps.

The intermediate image *F1_BLI$_n$* is first partitioned into blocks of pixels, called filtering blocks, according to a partition called filtering partition. For example, the filtering partition is equal to the encoding partition carried out by the base layer encoder 106.

For each filtering block, at least one parameter for the parametric filter F2 is determined, such that applying the parametric filter *F2* to the filtering block with the parameter(s) produces a corresponding block of the corrected base layer image *cor_BLI$_n$*.

In a first embodiment, the parametric filter *F2* is a sample adaptive offset filter (SAO filter). In this case, one parameter of each filtering block is an offset. The offset is added to the value of each pixel *p* of the filtering block, in order to obtain the value of the corresponding pixel *p* in the corrected base layer image *cor_BLI$_n$*:

$$|cor\_BLI_n[p]| = |F1\_BLI_n[p]| + P_n^k$$

where |*cor_BLI$_n$[p]*| is the value of the pixel *p* in the corrected base layer image *cor_BLI$_n$*, |*F1_BLI$_n$[p]*| is the value of the pixel *p* in the intermediate image *F1_BLI$_n$*, and $P_n^k$ is the offset associated with the filtering block k to which the pixel *p* belongs.

Alternatively, the filter parameters $P_n$ could be determined in a full-pel manner, which is equivalent to considering that each filtering block comprises only one pixel. In this case, the parameters determination module 112 determines one parameter for each pixel *p,* this parameter being an offset. The offset is added to the value of the pixel *p,* in order to obtain the value of the corresponding pixel *p* in the corrected base layer image *cor_BLI$_n$*:

$$|cor\_BLI_n[p]| = |F1\_BLI_n[p]| + P_n(p)$$

where |*cor_BLI$_n$[p]*| is the value of the pixel *p* in the corrected base layer image *cor_BLI$_n$*, |*F1_BLI$_n$[p]*| is the value of the pixel *p* in the intermediate image *F1_BLI$_n$*, and $P_n(p)$ is the offset associated with the pixel *p.*

Alternatively, the parameters determination module 112 could divide the pixels of each filtering block into a predetermined number of categories and then determine one parameter for each category for this filtering block. In this case, the value of each pixel *p* is intended to be added to the parameter for the category of the pixel *p.*

In the above alternatives, the offsets can be determined from the images *F1_BLI$_n$* and $BLI_n^*$ according to a method of the state of the art, such as the method disclosed in the document from Fu et al entitled "Sample Adaptive Offset for HEVC" published in MMPS in 2011 which is included herein by reference. It will be appreciated, however, that the invention is not restricted to this specific method for determining the offsets.

In another embodiment, the parametric filter *F2* is an adaptive loop filter. In this case, the parameters determination module 112 determines, for each filtering block, several filter parameters. For each pixel *p* of the filtering block, the filter parameters are weights of a linear combination of the values of the pixel *p* and neighboring pixels of the pixel *p.* The filter parameters can be determined from the images *F1_BLI$_n$* and $BLI_n^*$ according to a method of the state of the art such as the method disclosed in the document from Zheng et al entitled "directional adaptive loop filter for video coding "published in ICIP in 2011 which is included herein by reference. It will be appreciated, however, that the invention is not restricted to this specific method for determining the offsets.

When the version of the reconstructed base layer image *rec_BLI$_n$* is the reconstructed base layer image *rec_BLI$_n$* itself, the same previous steps may be carried out during step 214, in which case the intermediate image *F1_BLI$_n$* is replaced by the reconstructed base layer image *rec_BLI$_n$*.

During a step 216, the filter parameters $P_n$ are inserted into the base layer encoded video data *BLEVD.* According to a specific and non-limiting embodiment, the base layer encoder 106 encodes the filter parameters $P_n$ into the base layer encoded video data *BLEVD.* In a variant, the multiplexer 114 multiplexes the filter parameters $P_n$ with the base layer encoded video data *BLEVD.*

During an optional step 218, the multiplexer 114 multiplexes the base layer encoded video data *BLEVD* with the enhancement layer encoded video data *ELEVD* in order to produce the encoded video data *EVD.*

The video encoding system 100 then provides the encoded video data *EVD,* which comprises the base layer encoded video data *BLEVD,* the enhancement layer encoded video data *ELEVD* and, in the base layer encoded video data *BLEVD,* the parameters $P_n$.

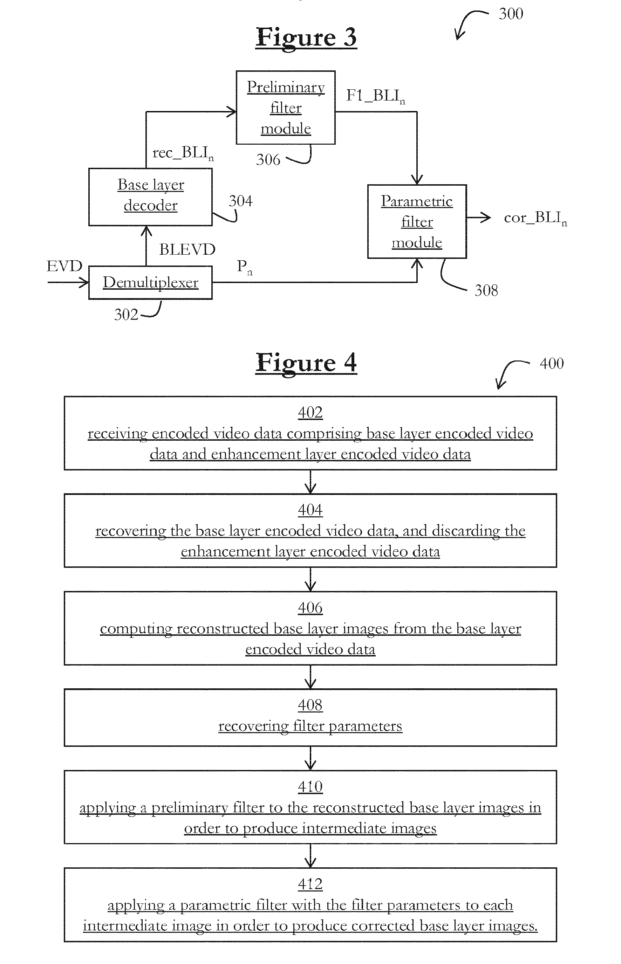

With reference to figure 3, a video decoder 300 will now be described.

The video decoder 300 is configured to receive encoded video data $EVD$, for example from the video encoder 100. The video decoder 300 is a low frame rate video decoder configured to decode the base layer images $BLI_n$ and to discard the enhancement layer images $ELI_n$. The encoded video data $EVD$ comprises base layer encoded video data $BLEVD$, enhancement layer encoded video data $ELEVD$ and filter parameters $P_n$.

The video decoder 300 optionally comprises a demultiplexer 302 configured to recover the base layer encoded video data $BLEVD$, in which the filter parameters $P_n$ are inserted (for example, by encoding or multiplexing), and to discard the enhancement layer encoded video data $ELEVD$. In a variant, the demultiplexer 302 is external to the video decoder 300. In this case, the video decoder 300 is configured to receive the base layer encoded video data $BLEVD$.

The video decoder 300 further comprises a base layer decoder 304 configured to compute reconstructed base layer images $rec\_BLI_n$ from the base layer encoded video data $BLEVD$. According to a specific embodiment and non-limiting embodiment, the base layer decoder 304 is an H.264 or an HEVC compliant decoder. If necessary, the base layer decoder 304 is further configured to decode the filter parameters $P_n$ from the base layer encoded video data $BLEVD$. In any case, each reconstructed base layer image $rec\_BLI_n$ is associated with at least one of the parameters $P_n$ that have been received.

The video decoder 300 further comprises an optional preliminary filter module 306 configured to apply the preliminary filter $F1$ (similar to the one of the video encoding system 100) to the reconstructed base layer images $rec\_BLI_n$ in order to produce the intermediate images $F1\_BLI_n$.

The video decoder 300 further comprises a parametric filter module 308 configured, for each reconstructed base layer image $rec\_BLI_n$, to apply the parametric filter $F2$ (similar to the one of the video encoding system 100) with the filter parameter(s) $P_n$ associated to the reconstructed base layer image $rec\_BLI_n$ to a version of the reconstructed base layer image $rec\_BLI_n$ in order to produce a corrected base layer image $cor\_BLI_n$. When the preliminary filter module 306 is present, the version of the reconstructed base layer image $rec\_BLI_n$ may be the intermediate image $F1\_BLI_n$. In the case the preliminary filter module 306 is absent, the version of the reconstructed base layer image $rec\_BLI_n$ may be the reconstructed base layer image $rec\_BLI_n$ itself.

With reference to figure 4, a video decoding method 400, for example carried out by the video decoder 300, will now be described.

During a step 402, the video decoder 300 receives the encoded video data $EVD$.

During an optional step 404, the demultiplexer 302 recovers the base layer encoded video data $BLEVD$, and discards the enhancement layer encoded video data $ELEVD$.

In a variant, during the step 402, the video decoder 300 receives only the base layer encoded video data $BLEVD$. In this case, there is no step 404.

During a step 406, the base layer decoder 304 computes reconstructed base layer images $rec\_BLI_n$ from the base layer encoded video data $BLEVD$.

Usually, in particular when the base layer decoder 304 is H.264 or HEVC compliant, for computing a reconstructed base layer image $rec\_BLI_n$, the reconstructed base layer image $rec\_BLI_n$ is first partitioned into coding units, e.g. into blocks or macroblocks, according to the encoding partition.

Each coding unit is then reconstructed by determining a prediction of the coding unit. For determining the prediction, particularly in the case of inter prediction, the encoding motion vector are decoded from the base layer encoded video data $BLEVD$ and applied to reference reconstructed coding units, that is to say coding units that have already been reconstructed.

A residual for the coding unit is then decoded from the base layer encoded video data $BLEVD$ and added to the prediction to reconstruct the coding unit. The residual is classically decoded by entropy decoding parts of the base layer encoded video data $BLEVD$, and by applying an inverse quantization and an inverse transform (e.g. an inverse DCT).

The set of reconstructed coding units forms the reconstructed base layer image $rec\_BLI_n$.

During a step 408, for each reconstructed base layer image $rec\_BLI_n$, the associated filter parameter(s) $P_n$ is/are recovered. In a specific and non-limiting embodiment, the base layer decoder 304 decodes the filter parameters $P_n$ from the base layer encoded video data $BLEVD$. In a variant, the demultiplexer 302 recovers the base layer encoded video data $BLEVD$ and the filter parameters $P_n$. This variant applies when, during the step 216, the filter parameters $P_n$ and the base layer encoded video data $BLEVD$ are multiplexed.

During an optional step 410, for each reconstructed base layer images $rec\_BLI_n$, the preliminary filter module 306 applies the preliminary filter $F1$ (similar to the one of the video encoding system 100) to the reconstructed base layer image $rec\_BLI_n$ in order to produce the corresponding intermediate image $F1\_BLI_n$.

During a step 412, for each reconstructed base layer images $rec\_BLI_n$, a parametric filter module 308 applies a parametric filter $F2$ with the filter parameter(s) $P_n$ associated to the reconstructed base layer image $rec\_BLI_n$ to the version of the reconstructed base layer image $rec\_BLI_n$ in order to produce the corresponding corrected base layer image $cor\_BLI_n$.

When the step 410 (preliminary filtering) is carried out, the version of the reconstructed base layer image

$rec\_BLI_n$ may be the intermediate image $F1\_BLI_n$. In the contrary, the version of the reconstructed base layer image $rec\_BLI_n$ may be the reconstructed base layer image $rec\_BLI_n$ itself.

In this manner, the video decoder 300 provides corrected base layer image $cor\_BLI_n$ which are similar to the temporally filtered images $BLI_n^*$ determined in the video encoding 100.

The corrected base layer images $cor\_BLI_n$ may then be successively displayed on a display screen (not depicted), without any noticeable stroboscopic effect.

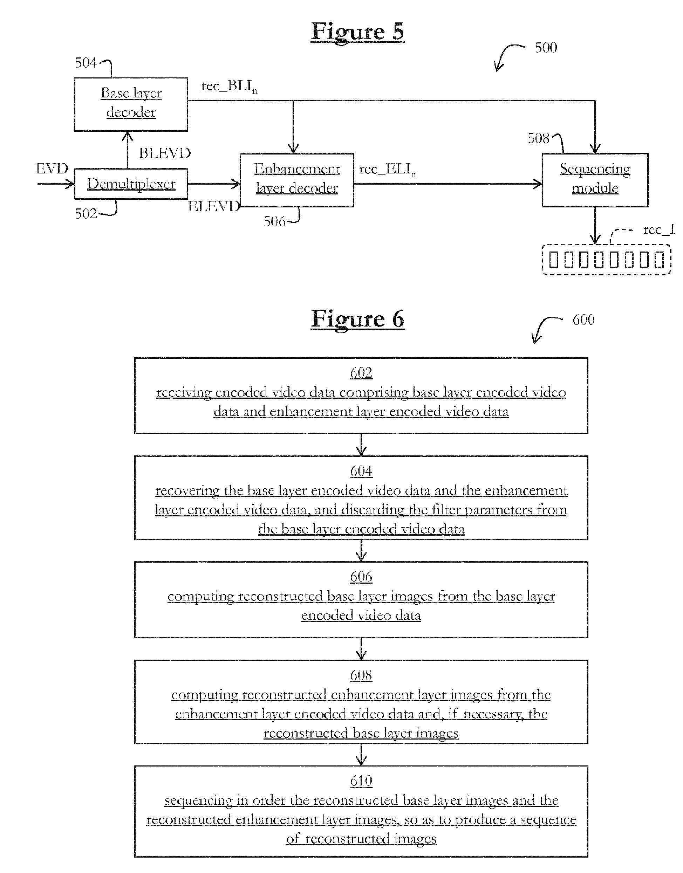

With reference to figure 5, a video decoder 500 will now be described.

The video decoder 500 is configured to receive encoded video data $EVD$, for example from the video encoder 100. The video decoder 500 is a high frame rate video decoder configured to decode both the base layer images and the enhancement layer images.

The video decoder 500 first comprises a demultiplexer 502 configured to recover the base layer encoded video data $BLEVD$ and the enhancement layer encoded video data $ELEVD$, and to discard the filter parameters $P_n$. In a variant, the demultiplexer 502 is external to the video decoder 500.

The video decoder 500 further comprises a base layer decoder 504 intended to compute reconstructed base layer images $rec\_BLI_n$ from the base layer encoded video data $BLEVD$. In this case, the filter parameters $P_n$ are discarded by the video decoder 500.

The video decoder 500 further comprises an enhancement layer decoder 506 configured to compute reconstructed enhancement layer images $rec\_ELI_n$ from the enhancement layer encoded video data $ELEVD$ and, if necessary, the reconstructed base layer images $rec\_BLI_n$.

The video decoder 500 further comprises a sequencing module 508 configured to sequence in order the reconstructed base layer images $rec\_BLI_n$ and the reconstructed enhancement layer images $rec\_ELI_n$, so as to produce a sequence of reconstructed images $rec\text{-}I$.

The reconstructed images $rec\_I$ may for example be displayed on a display screen (not depicted).

With reference to figure 6, a video decoding method 600, for example carried out by the video decoder 500, will now be described.

During a step 602, the video decoder 500 receives the encoded video data $EVD$.

During an optional step 604, the demultiplexer 502 recovers the base layer encoded video data $BLEVD$ and the enhancement layer encoded video data $ELEVD$, and discards the filter parameters $P_n$ from the base layer encoded video data $BLEVD$.

During a step 606, the base layer decoder 504 recovers if necessary the filter parameters $P_n$ from the base layer encoded video data $BLEVD$ and computes the reconstructed base layer images $rec\_BLI$ from the base layer encoded video data $BLEVD$.

During a step 608, the enhancement layer decoder 506 computes the reconstructed enhancement layer images $rec\_ELI_n$ from the enhancement layer encoded video data $ELEVD$ and, if necessary, the reconstructed base layer images $rec\_BLI_n$.

During a step 610, the sequencing module 508 sequences in order the reconstructed base layer images $rec\_BLI_n$ and the reconstructed enhancement layer images $rec\_ELI_n$, so as to produce a sequence of reconstructed images $rec\_I$.

In this manner, the video decoder 500 provides reconstructed base layer image $rec\_BLI_n$ and reconstructed enhancement layer images $rec\_ELI_n$, without any temporal filtering.

The corrected base layer images $cor\_BLI_n$ may then be successively displayed on a display screen (not depicted), without any noticeable loss in quality.

As it is apparent from the previous description, the invention allows to produce a temporally scalable video which can be decoded by a low frame rate decoder to produce base layer images avoiding flickering effects, and which can be decoded by a high frame rate decoder to produce base and enhancement layer images without any blurring of the base layer images degrading the video quality.

The present invention is not limited to the embodiment previously described, but instead defined by the appended claims. It will in fact be apparent to the one skilled in the art that modifications can be applied to the embodiment previously described.

For example, the preliminary filter module 110 could be omitted, so that the parametric filter module 112 would receive directly the reconstructed base layer images $rec\_BLI$.

It should be noted that figures 2, 4 and 6 illustrate only one possible way to carry out the methods steps. In other embodiments, the steps of each method could be carried out concurrently and/or in any possible order.

Besides, the terms used in the appended claims shall not be understood as limited to the elements of the embodiments previously described, but on the contrary shall be understood as including all equivalent elements that the one skilled in the art is able to derive using their general knowledge.

**Claims**

1. A video encoding method (200) comprising:

   - receiving (202) a video comprising a sequence of images (*I*), the sequence of images (*I*) comprising base layer images ($BLI_n$) and enhancement layer images ($ELI_n$),

   - temporally filtering (204) each base layer image ($BLI_n$) into a temporally filtered image $(BLI_n^*)$,

   - encoding (206) the base layer images ($BLI_n$) in order to produce base layer encoded video data *(BLEVD)* and reconstructed base layer images ($rec\_BLI_n$),
   - encoding (206) the enhancement layer images ($ELI_n$) in order to produce enhancement layer encoded video data *(BLEVD)*,
   - determining (214) at least one parameter ($P_n$) of a parametric filter for each reconstructed base layer image ($rec\_BLI_n$), such that applying the parametric filter with the parameter(s) ($P_n$) to a version ($rec\_BLI_n$; $F1\_BLI_n$) of the reconstructed base layer image ($rec\_BLI_n$) produces a corrected base layer image ($cor\_BLI_n$) which is

   closer to the temporally filtered image $(BLI_n^*)$ than the version ($rec\_BLI_n$; $F1\_BLI_n$) of the reconstructed base layer image ($rec\_BLI_n$),

   - providing the base layer encoded video *(BLEVD)*, the enhancement layer encoded video *(ELEVD)* and the parameters ($P_n$).

2. The video encoding method (200) according to claim 1, wherein the version ($rec\_BLI_n$; $F1\_BLI_n$) of the reconstructed base layer image ($rec\_BLI_n$) is the reconstructed base layer image ($rec\_BLI_n$) itself.

3. The video encoding method (200) according to claim 1, comprising applying a preliminary filter to each reconstructed base layer image ($rec\_BLI_n$), and wherein the version ($rec\_BLI_n$; $F1\_BLI_n$) of each reconstructed base layer image ($rec\_BLI_n$) is the intermediate image ($F1\_BLI_n$) for this reconstructed base layer image ($rec\_BLI_n$).

4. The video encoding method (200) according to claim 3 , wherein the preliminary filter is independent of the parameters ($P_n$).

5. The video encoding method (200) according to claim 3 or 4, wherein encoding the base layer images ($BLI_n$) comprises, for at least one base layer image ($BLI_n$), determining motion vectors, called encoding motion vectors ($enc\_MV_n$), and wherein applying the preliminary filter to the reconstructed base layer image ($rec\_BLI_n$) comprises determining motion vectors, called filtering motion vectors, used by the preliminary filter, at least one filtering motion vector being determined from at least one encoding motion vector ($enc\_MV_n$).

6. The video encoding method (200) according to claim 5, wherein, for determining at least one filtering motion vector, an encoding motion vector is used to derive a candidate in a motion estimation process for determining the filtering motion vector.

7. The video encoding method (200) according to claim 5 or 6, wherein the preliminary filter comprises a motion compensated temporal filter.

8. The video encoding method (200) according to any one of claims 1 to 7, wherein the corrected base layer image ($cor\_BLI_n$) being closer to the temporally filtered image $(BLI_n^*)$ than the version ($rec\_BLI_n$; $F1\_BLI_n$) of the reconstructed base layer image ($rec\_BLI_n$) means that, according to a predetermined distance, the distance between the content of the corrected base layer image ($cor\_BLI_n$) and the content of the temporally filtered image $(BLI_n^*)$ is smaller than the distance between the content of the version ($rec\_BLI_n$; $F1\_BLI_n$) of the reconstructed base layer image ($rec\_BLI_n$) and the content of the temporally filtered image $(BLI_n^*)$.

9. The video encoding method (200) according to any one of claims 1 to 8, wherein, for at least one base layer image ($BLI_n$), the temporal filtering is carried out from at least one enhancement layer image ($ELI_n$), for example by computing a mean of the base layer image ($BLI_n$) and the enhancement layer image(s) ($ELI_n$).

**10.** The video encoding method (200) according to any one of claims 1 to 9, wherein encoding the base layer images ($BLI_n$) comprises, for at least one base layer image ($BLI_n$):

- partitioning (210) the base layer image ($BLI_n$) into coding units according to a partition, called encoding partition, and

and wherein determining the parameters ($P_n$) comprises:

- partitioning the version ($rec\_BLI_n$; $F1\_BLI_n$) of the reconstructed base layer image ($rec\_BLI_n$) into filtering blocks according to the encoding partition,
- determining, for each filtering block, at least one parameter for the parametric filter, such that applying the parametric filter to the filtering block with the parameter(s) produces a corresponding block of the corrected base layer image ($cor\_BLI_n$).

**11.** The video encoding method (200) according to any one of claims 1 to 10, wherein the parametric filter comprises an adaptive loop filter or a sample adaptive offset filter.

**12.** Computer program comprising instructions which, when carried out by a computer, make the computer carry out a video encoding method (200) according to any one of claims 1 to 11.

**13.** Video encoding system (100) intended to receive a video comprising a sequence of images ($I$) comprising base layer images ($BLI_n$) and enhancement layer images ($ELI_n$), comprising:

- a temporal filtering module (102) configured to temporally filter each base layer image ($BLI_n$) into a temporally filtered image $(BLI_n^*)$,
- a base layer encoder (106) configured to encode the base layer images ($BLI_n$) in order to produce base layer encoded video data *(BLEVD)* and reconstructed base layer images ($rec\_BLI_n$),
- an enhancement layer encoder (106) configured to encode the enhancement layer images ($ELI_n$) in order to produce enhancement layer encoded video data *(BLEVD)*,
- a parameters determination module (112) configured to determine at least one parameter ($P_n$) of a parametric filter for each reconstructed base layer image ($rec\_BLI_n$), such that applying the parametric filter with the parameter(s) ($P_n$) to a version ($rec\_BLI_n$; $F1\_BLI_n$) of the reconstructed base layer image ($rec\_BLI_n$) produces a corrected base layer image ($cor\_BLI_n$) which is closer to the temporally filtered image $(BLI_n^*)$ than the version ($rec\_BLI_n$; $F1\_BLI_n$) of the reconstructed base layer image ($rec\_BLI_n$),

the video encoding system (100) being configured to provide the base layer encoded video *(BLEVD)*, the enhancement layer encoded video *(ELEVD)* and the parameters *(Pₙ)*

**14.** Video decoding method (400) comprising:

- receiving (402) base layer encoded video data *(BLEVD)*, enhancement layer encoded video data *(ELEVD)* and parameters ($P_n$),
- computing (406) reconstructed base layer images ($rec\_BLI_n$) from the base layer encoded video data *(BLEVD)*, each reconstructed base layer image ($rec\_BLI_n$) being associated with at least one of the parameters ($P_n$) that have been received,
- for each reconstructed base layer image ($rec\_BLI_n$), applying (412) a parametric filter with the parameter(s) ($P_n$) associated to the reconstructed base layer image ($rec\_BLI_n$) to a version ($rec\_BLI_n$; $F1\_BLI_n$) of the reconstructed base layer image ($rec\_BLI_n$) in order to produce a corrected base layer image ($cor\_BLI_n$).

**15.** Computer program comprising instructions which, when carried out by a computer, make the computer carry out a video encoding method according to claim 14.

**16.** Video decoder (300) intended to receive base layer encoded video data *(BLEVD)*, enhancement layer encoded video data *(ELEVD)* and parameters ($P_n$), comprising:

- a base layer decoder (304) configured to compute reconstructed base layer images ($rec\_BLI_n$) from the base

layer encoded video data *(BLEVD)*, each reconstructed base layer image ($rec\_BLI_n$) being associated with at least one of the parameters ($P_n$) that have been received,
- a parametric filter module (306) configured, for each reconstructed base layer image ($rec\_BLI_n$), to apply a parametric filter with the parameter(s) ($P_n$) associated to the reconstructed base layer image ($rec\_BLI_n$) to a version ($rec\_BLI_n$; $F1\_BLI_n$) of the reconstructed base layer image ($rec\_BLI_n$) in order to produce a corrected base layer image ($cor\_BLI_n$).

# Figure 1

100

# Figure 2

200

┌─────────────────────────────────────────────────────────────┐
│ **202**                                                       │
│ receiving a video comprising a sequence of images             │
└─────────────────────────────────────────────────────────────┘
                              ↓
┌─────────────────────────────────────────────────────────────┐
│ **204**                                                       │
│ temporally filtering each base layer image into a temporally filtered │
│ image                                                         │
└─────────────────────────────────────────────────────────────┘
                              ↓
┌─────────────────────────────────────────────────────────────┐
│ **206**                                                       │
│ encoding the sequence of images                               │
│  ┌──────────────────────────────────────────────────────┐    │
│  │ **208**                                               │    │
│  │ encoding the base layer images                        │    │
│  └──────────────────────────────────────────────────────┘    │
│                         ↓                                     │
│  ┌──────────────────────────────────────────────────────┐    │
│  │ **210**                                               │    │
│  │ encoding the enhancement layer images                 │    │
│  └──────────────────────────────────────────────────────┘    │
└─────────────────────────────────────────────────────────────┘
                              ↓
┌─────────────────────────────────────────────────────────────┐
│ **212**                                                       │
│ for each reconstructed base layer image, applying a preliminary filter │
│ to the reconstructed base layer image in order to produce an  │
│ intermediate image                                            │
└─────────────────────────────────────────────────────────────┘
                              ↓
┌─────────────────────────────────────────────────────────────┐
│ **214**                                                       │
│ determining, for each intermediate image, parameters of a parametric │
│ filter                                                        │
└─────────────────────────────────────────────────────────────┘
                              ↓
┌─────────────────────────────────────────────────────────────┐
│ **216**                                                       │
│ inserting the filter parameters into the base layer encoded video data │
└─────────────────────────────────────────────────────────────┘
                              ↓
┌─────────────────────────────────────────────────────────────┐
│ **218**                                                       │
│ multiplexing the base layer encoded video data with the enhancement │
│ layer encoded video data in order to produce the encoded video data │
└─────────────────────────────────────────────────────────────┘

## Figure 3

300

```
                    ┌─────────────┐
                    │ Preliminary │   F1_BLI_n
              ┌────→│   filter    │──────┐
              │     │   module    │      │
              │     └─────────────┘      │
   rec_BLI_n  │         306              │
              │                          ↓
   ┌──────────────┐              ┌─────────────┐
   │  Base layer  │   304        │  Parametric │
   │   decoder    │              │    filter   │───→  cor_BLI_n
   │              │              │    module   │
   └──────────────┘              └─────────────┘
         ↑                              ↑
         │ BLEVD                        │
   EVD   │              P_n             │
   ─────→┌──────────────┐──────────────┘
         │ Demultiplexer │          308
         └──────────────┘
              302
```

## Figure 4

400

┌────────────────────────────────────────────────────────────┐
│ 402                                                          │
│ receiving encoded video data comprising base layer encoded   │
│ video data and enhancement layer encoded video data          │
└────────────────────────────────────────────────────────────┘
                              ↓
┌────────────────────────────────────────────────────────────┐
│ 404                                                          │
│ recovering the base layer encoded video data, and discarding │
│ the enhancement layer encoded video data                     │
└────────────────────────────────────────────────────────────┘
                              ↓
┌────────────────────────────────────────────────────────────┐
│ 406                                                          │
│ computing reconstructed base layer images from the base layer│
│ encoded video data                                           │
└────────────────────────────────────────────────────────────┘
                              ↓
┌────────────────────────────────────────────────────────────┐
│ 408                                                          │
│ recovering filter parameters                                 │
└────────────────────────────────────────────────────────────┘
                              ↓
┌────────────────────────────────────────────────────────────┐
│ 410                                                          │
│ applying a preliminary filter to the reconstructed base layer│
│ images in order to produce intermediate images               │
└────────────────────────────────────────────────────────────┘
                              ↓
┌────────────────────────────────────────────────────────────┐
│ 412                                                          │
│ applying a parametric filter with the filter parameters to   │
│ each intermediate image in order to produce corrected base    │
│ layer images.                                                │
└────────────────────────────────────────────────────────────┘

## Figure 5

504

Base layer
decoder

rec_BLI$_n$

500

BLEVD

508

EVD

Demultiplexer

502

ELEVD

Enhancement
layer decoder

rec_ELI$_n$

Sequencing
module

506

rec_I

□ □ □ □ □ □ □ □

## Figure 6

600

602
receiving encoded video data comprising base layer encoded video
data and enhancement layer encoded video data

604
recovering the base layer encoded video data and the enhancement
layer encoded video data, and discarding the filter parameters from
the base layer encoded video data

606
computing reconstructed base layer images from the base layer
encoded video data

608
computing reconstructed enhancement layer images from the
enhancement layer encoded video data and, if necessary, the
reconstructed base layer images

610
sequencing in order the reconstructed base layer images and the
reconstructed enhancement layer images, so as to produce a sequence
of reconstructed images

Europäisches
Patentamt

European
Patent Office

Office européen
des brevets

# EUROPEAN SEARCH REPORT

Application Number

EP 14 30 6559

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALEXIS MICHAEL TOURAPIS ET AL: "A Frame Compatible System for 3D Delivery", 93. MPEG MEETING; 26-7-2010 - 30-7-2010; GENEVA; (MOTION PICTURE EXPERT GROUP OR ISO/IEC JTC1/SC29/WG11), no. M17925, 30 July 2010 (2010-07-30), XP030046515, * the whole document * | 1-16 | INV. H04N19/117 H04N19/154 H04N19/31 H04N19/587 H04N19/82 |
| X | US 2014/192869 A1 (LAROCHE GUILLAUME [FR] ET AL) 10 July 2014 (2014-07-10) | 1,10,13, 14,16 | |
| A | * the whole document * | 2-9,11, 12,15 | |
| A | WO 2012/006299 A1 (DOLBY LAB LICENSING CORP [US]; PAHALAWATTA PESHALA V [US]; TOURAPIS AL) 12 January 2012 (2012-01-12) * the whole document * | 1-16 | |
| A | SCHWARZ H ET AL: "Overview of the Scalable Video Coding Extension of the H.264/AVC Standard", IEEE TRANSACTIONS ON CIRCUITS AND SYSTEMS FOR VIDEO TECHNOLOGY, IEEE SERVICE CENTER, PISCATAWAY, NJ, US, vol. 17, no. 9, 1 September 2007 (2007-09-01), pages 1103-1120, XP011193019, ISSN: 1051-8215, DOI: 10.1109/TCSVT.2007.905532 * the whole document * | 1-16 | TECHNICAL FIELDS SEARCHED (IPC) H04N |

The present search report has been drawn up for all claims

| Place of search | Date of completion of the search | Examiner |
|---|---|---|
| Munich | 24 February 2015 | Cyranka, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 002 946 A1**

## ANNEX TO THE EUROPEAN SEARCH REPORT
## ON EUROPEAN PATENT APPLICATION NO.

EP 14 30 6559

24-02-2015

| Patent document cited in search report | Publication date | Patent family member(s) | Publication date |
|---|---|---|---|
| US 2014192869 A1 | 10-07-2014 | GB 2509707 A<br>US 2014192869 A1 | 16-07-2014<br>10-07-2014 |
| WO 2012006299 A1 | 12-01-2012 | CN 103155568 A<br>EP 2591609 A1<br>JP 2013534117 A<br>US 2013106998 A1<br>WO 2012006299 A1 | 12-06-2013<br>15-05-2013<br>29-08-2013<br>02-05-2013<br>12-01-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **FU et al.** Sample Adaptive Offset for HEVC. *MMPS,* 2011